# EUROPÄISCHE PATENTSCHRIFT

(11) **EP 0 484 407 B1**
(45) Veröffentlichungstag und Bekanntmachung des Hinweises auf die Patenterteilung: **01.09.1993**
(21) Anmeldenummer: 90911599.0
(22) Anmeldetag: 17.07.1990
(51) Int. Cl.: B23B 29/034

(54) **WERKZEUG FÜR DEN EINSATZ IN WERKZEUGMASCHINEN**
TOOL FOR USE IN A MACHINE TOOL
OUTIL S'UTILISANT DANS DES MACHINES-OUTILS

(30) Priorität: 25.07.1989 DE 3924517
(43) Veröffentlichungstag der Anmeldung: 13.05.1992
(73) Patentinhaber: KOMET Präzisionswerkzeuge Robert Breuning GmbH, D-74354 Besigheim (DE)
(72) Erfinder: SCHEER, Gerhard, D-7121 Löchgau (DE); SCHNEIDER, Eberhard, D-7122 Besigheim (DE)
(74) Vertreter: Wolf, Eckhard, Dr.-Ing.
(86) Internationale Anmeldenummer: EP9001167
(87) Internationale Veröffentlichungsnummer: WO9101192

(56) Entgegenhaltungen:
- EP-A- 54 838
- DE-B- 2 060 869
- DE-C- 635 819
- DE-C- 886 238
- DE-C- 907 237
- US-A- 2 874 597
- DERWENTS ABSTRACT NO: A14 61 B/01, SU 592526 publ. woche 7901 (RYAZAN ORGSTANKINPR)

## Beschreibung

Die Erfindung betrifft ein Werkzeug für den Einsatz in Werkzeugmaschinen mit einem Grundkörper, einem mittels eines Verstellmechanismus relativ zum Grundkörper verstellbaren, vorzugsweise als Drehmeißel ausgebildeten Schneidenträger, einer im Grundkörper drehbar und axial unverschiebbar gelagerten Gewindespindel, einem mit einem Innengewinde auf der Gewindespindel angeordneten, parallel zur Gewindespindel im Grundkörper gleitend geführten Gleitkörper, einem im wesentlichen quer zur Gewindespindel verschiebbar angeordneten, den Schneidenträger tragenden oder bildenden Schieber und einer am Schieber angeordneten, mit der Gewindespindel einen spitzen Keilwinkel einschließenden Keilführung für den Eingriff des Gleitkörpers.

Es ist ein Werkzeug dieser Art bekannt (US-A-2874597), bei welchem die Spindel unmittelbar über eine drehfest mit der Spindel verbundene Skalenscheibe betätigt wird. Der zwischen Keilführung und Gewindespindel eingeschlossene Keilwinkel ist dort mit ca. 20° relativ groß. Die Zustellgenauigkeit des nur zweistufigen Verstellmechanismus läßt daher zu wünschen übrig. Dies gilt um so mehr, als der genannte Keilwinkel außerhalb des Selbsthemmbereiches liegt, so daß zu befürchten ist, daß es unter der Einwirkung hoher Schnittkräfte zu einer Selbstverstellung des Schneidenträgers kommt.

Ausgehend hiervon liegt der Erfindung die Aufgabe zugrunde, das bekannte Werkzeug der eingangs angegebenen Art dahingehend zu verbessern, daß mit relativ einfachen technischen Mitteln eine Erhöhung der Zustellgenauigkeit erzielt werden kann.

Zur Lösung dieser Aufgabe werden die im Anspruch 1 angegebenen Merkmale vorgeschlagen. Weitere vorteilhafte Ausgestaltungen und Weiterbildungen der Erfindung ergeben sich aus den abhängigen Ansprüchen.

Die Erfindung geht von dem Gedanken aus, daß bei Verwendung eines Keilgetriebes mit genügend kleinem Keilwinkel als letzte Stufe eines zwei- oder mehrstufigen Getriebes zur Verstellung des Schneidenkörpers eine erhebliche Erhöhung der Zustellgenauigkeit erzielt werden kann. Um dies zu erreichen, wird gemäß der Erfindung vorgeschlagen, daß der zwischen Keilführung und Gewindespindel eingeschlossene Keilwinkel kleiner als 6° ist und daß die Gewindespindel über einen am Umfang des Grundkörpers um eine zur Achse der Gewindespindel senkrechte Achse drehbaren Verstellring durch ein Zahnradgetriebe antreibbar ist, wobei das Zahnradgetriebe vorgespannt ist und ein drehfest auf der Gewindespindel angeordnetes Zahnritzel enthält.

Im Interesse einer möglichst hohen Paßgenauigkeit weist der Grundkörper zweckmäßig eine im wesentlichen quer zur Gewindespindel verlaufende zylindrische Lagerbohrung für den ebenfalls zylindrisch ausgebildeten Schieber auf. In diesem Falle ist zusätzlich eine Verdrehsicherung zwischen Schieber und Grundkörper erforderlich.

Wegen der erwünschten hohen Zustellgenauigkeit sollte das Passungsspiel des Gleitkörpers im Grundkörper und in der Keilführung des Schiebers weniger als 5 µm betragen. Entsprechendes gilt auch für das Passungsspiel des zylindrischen Schiebers im Grundkörper.

Der Gleitkörper kann beispielsweise als Gleitstein mit zwei um den Keilwinkel gegeneinander versetzten Gleitflächenpaaren ausgebildet sein, wobei die Keilführung in diesem Falle als das eine Gleitflächenpaar des Gleitsteins aufnehmende Führungskulisse ausgebildet ist.

Zur Verbesserung des Führungsverhaltens und der Gleitverhältnisse weist der Schieber gemäß einer bevorzugten Ausgestaltung der Erfindung eine die Keilführung bildende Flächenverzahnung auf, in die der Gleitkörper mit einer komplementären Flächenverzahnung eingreift. Vorteilhafterweise weisen die zueinander komplementären Flächenverzahnungen im querschnitt dreieckige oder trapezförmige Zähne bzw. Zahnzwischenräume auf, um zu erreichen, daß die Flächenverzahnungen mit ihren Flanken keilförmig ineinandergreifen. Dadurch ist es möglich, den Schieber in seiner Verschieberichtung spielfrei zu stellen, indem die zueinander komplementären Flächenverzahnungen durch eine quer zur Verzahnungsfläche gerichtete Anpreßkraft gegeneinander gepreßt werden. Die Spielfreistellung des Schiebers kann mit Hilfe eines Klemmorgans erzielt werden, das im Grundkörper verschiebbar ist und unmittelbar oder mittelbar über eine Druckplatte gegen den Gleitkörper quer zu der durch die Verschieberichtungen des Gleitkörpers und des Schiebers aufgespannten Ebene anpreßbar ist. Um bei der Spielfreistellung die Ausübung von Zwangskräften auf die Spindel zu vermeiden, ist diese gemäß einer vorteilhaften Ausgestaltung der Erfindung quer zur Spindelachse schwimmend im Grundkörper gelagert. Dies läßt sich vorteilhafterweise dadurch verwirklichen, daß die Gewindespindel endseitig in quer zur Spindelachse begrenzt gegenüber dem Grundkörper verschiebbaren Kugellagern und/oder Lagerscheiben gelagert ist.

Um bei der erfindungsgemäßen Feinstzustellung trotz hoher Zustellgenauigkeit einen ausreichenden Verstellbereich zu erhalten, wird der Keilwinkel zwischen Keilführung und Gewindespindel zweckmäßig 1,5° und 3° gewählt. Da der hiermit erzielbare Verstellbereich zwischen etwa 0,2 und 0,8 mm recht klein ist und die Zustellbewegung mit geringer Vorschubgeschwindigkeit erfolgt, wird gemäß einer weiteren bevorzugten Ausgestaltung der Erfindung vorgeschlagen, daß der Schneidenträger am Schieber zum Zwecke der Grobpositionierung parallel zu dessen Verschieberichtung vorzugsweise mittels eines Differentialgewindetriebs verschiebbar geführt und in der gewünschten Verschiebeposition festlegbar ist. Zu diesem Zweck kann im Schieber eine parallel zu dessen Verschieberichtung verlaufende, vorzugsweise im Querschnitt quadratische Führungsöffnung zur Aufnahme des Schneidenträgers bzw. dessen Schaftes angeordnet werden. Der Schneidenträger wird vorzugsweise mittels einer quer zur Schieberachse in einem Innengewinde des Schiebers geführten Klemmschraube am Schieber festgelegt. Damit ist es möglich, den Schieber unter der Einwirkung der Klemmschraube elastisch aufzuspreizen und in seiner zylindrischen Lagerbohrung spielfrei zu stellen.

Um bei der hohen Zustellgenauigkeit auch die Ablesegenauigkeit zu verbessern, wird nach einer weiteren vorteilhaften Ausgestaltung der Erfindung die Gewindespindel über einen am Umfang des Grundkörpers um eine zur Gewindespindelachse senkrechte Achse drehbaren Verstell- und Skalenring mittels des als Kronenradgetriebe ausgebildeten Zahnradgetriebes angetrieben. Vorteilhafterweise kämmt dabei das auf dem Grundkörper gelagerte, mit dem Verstellring drehfest oder einstückig verbundene Kronenrad unter Vorspannung mit dem zugehörigen, auf der Spindelachse drehfest angeordneten Zahnritzel. Das Kronenrad kann hierzu auf einem am Grundkörper angeordneten, vorzugsweise angeformten Zylinderzapfen drehbar gelagert und an einem auf den Zylinderzapfen aufgeschobenen, gegen eine Axialschulter des Zylinderzapfens gespannten, axiale Federmittel zur Erzeugung der Vorspannung enthaltenden Ringkörper axial abgestützt werden. Der Zylinderzapfen steht zweckmäßig axial über den Ringkörper über und bildet zusammen mit dessen freier Stirnfläche ein Anschlußelement einer Paßzapfen-/Planflächenkupplung.

Im folgenden wird die Erfindung anhand zweier in der Zeichnung in schematischer Weise dargestellter Ausführungsbeispiele näher erläutert. Es zeigen
- Fig. 1: eine Seitenansicht eines Drehwerkzeugs mit Feineinstellmechanismus in teilweise geschnittener Darstellung;
- Fig. 2: einen Schnitt entlang der Schnittlinie 2-2 der Fig. 1;
- Fig. 3: einen Schnitt entlang der Schnittlinie 3-3 der Fig. 1;
- Fig. 4: eine Seitenansicht eines gegenüber Fig. 1 bis 3 abgewandelten Ausführungsbeispiels eines Drehwerkzeugs in teilweise geschnittener Darstellung;
- Fig. 5: einen Schnitt entlang der Schnittlinie 5-5 der Fig. 4;
- Fig. 6: einen Schnitt entlang der Schnittlinie 6-6 der Fig. 4.

Die in der Zeichnung dargestellten Feindrehwerkzeuge bestehen im wesentlichen aus einem Grundkörper 10, einem am Grundkörper 10 angeformten Paßzapfen 12 für den Anschluß an eine nicht dargestellte Maschinenspindel, einem relativ zum Grundkörper 10 radial verstellbaren, eine als Wendeplatte ausgebildete Schneidplatte 14 tragenden Drehmeißel 16, und einem im Grundkörper integrierten Verstellmechanismus für den Drehmeißel 16

Der Verstellmechanismus für die Feinzustellung ist dreistufig ausgebildet:

Die erste Stufe enthält ein durch einen auf dem Umfang des Grundkörpers 10 drehbar angeordneten Verstellring 20 um die Achse des Grundkörpers 10 verdrehbares Kronenrad 22. Der Verstellring trägt an seinem Umfang eine Skala 18, die relativ zu einem Nullstrich 19 auf einer mit dem Grundkörper 10 starr verbundenen Hülse 24 verstellbar ist.

Die zweite Getriebestufe des Verstellmechanismus enthält eine im Grundkörper um eine Querachse des Grundkörpers drehbar und verschiebefest gelagerte Gewindespindel 26, die an ihrem einen Ende drehfest mit einem mit dem Kronenrad 22 kämmenden Ritzel 28 verbunden ist. Auf der Gewindespindel 26 ist mit einem Innengewinde 30 ein Gleitkörper 32 angeordnet, der in einer zur Gewindespindel 26 parallel ausgerichteten Gleitführung 34 des Grundkörpers 10 verschiebbar geführt ist.

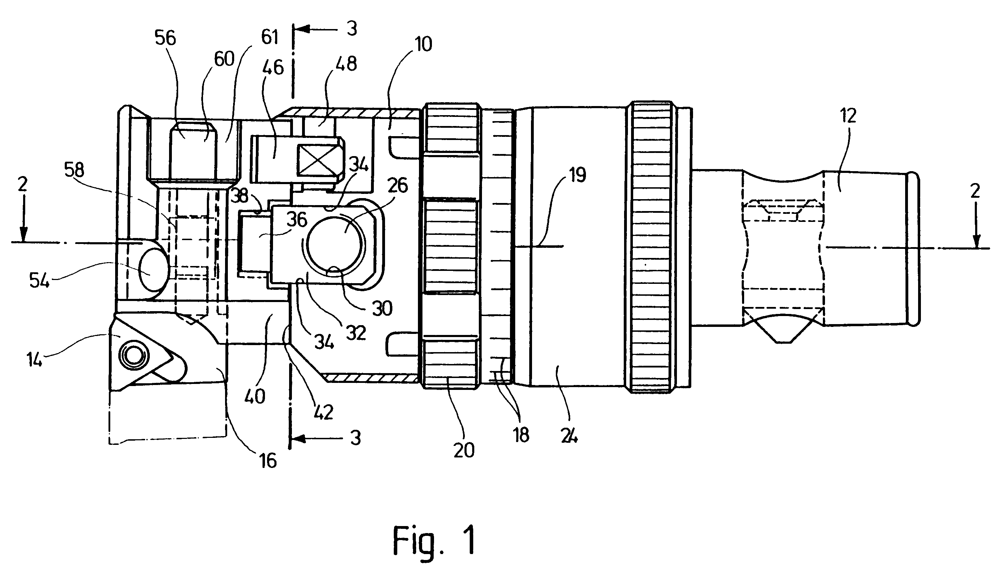

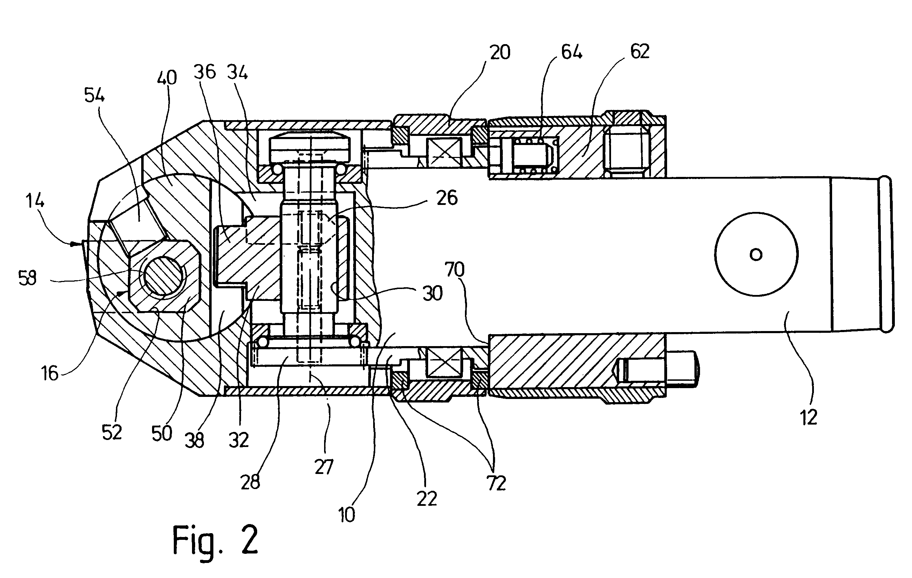

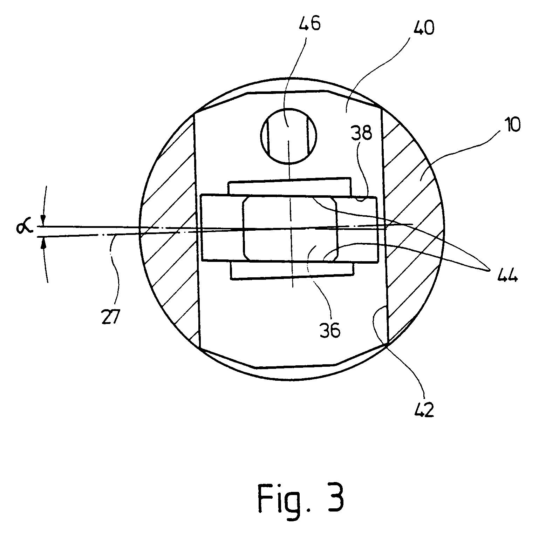

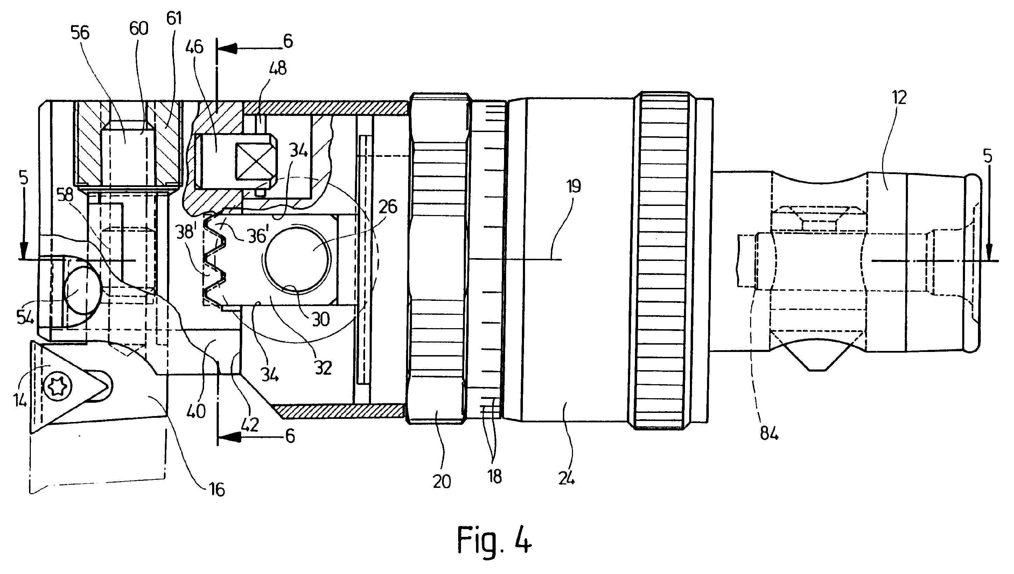

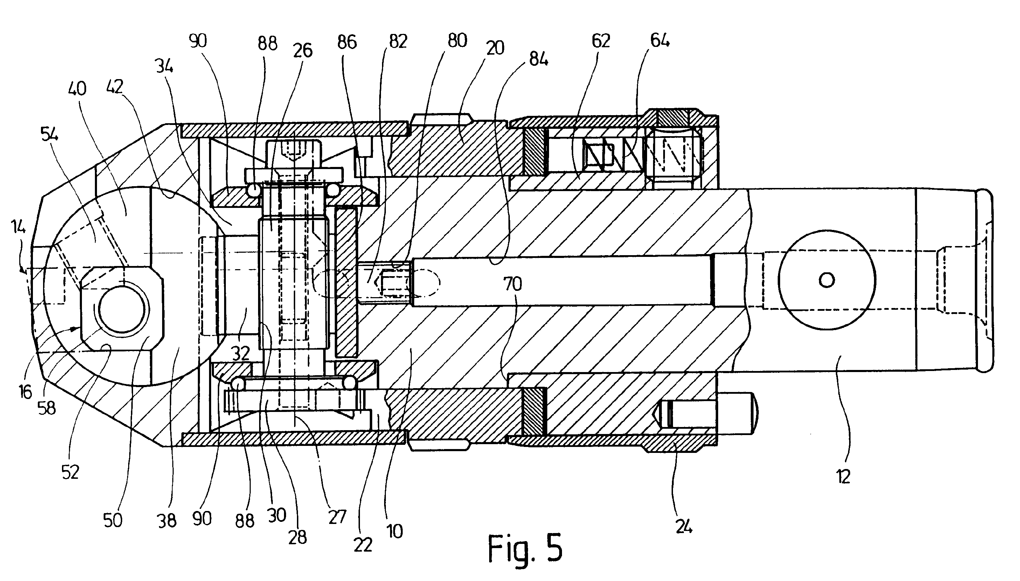

Der Gleitkörper 32 trägt im Falle der Fig. 1 bis 3 einen Ansatz 36, der in eine Führungskulisse 38 in einem zylindrischen Schieber 40 eingreift. Bei dem Ausführungsbeispiel nach Fig. 4 bis 6 sind statt des Ansatzes 36 und der Führungskulisse 38 zueinander komplementäre Flächenverzahnungen 36' und 38' vorgesehen. Der Schieber 40 ist in einer senkrecht zur Gewindespindel 26 ausgerichteten Führungsbohrung 42 relativ zum Grundkörper radial verschiebbar gelagert. Die Führungskulisse 38 und die gegen diese anliegenden Seitenflanken 44 des Gleitkörperansatzes 36 bzw. die Zahnflanken der Flächenverzahnung 36', 38' schließen mit der Spindelachse 27 einen Keilwinkel α von ca. 2° ein, und bilden damit als letzte Stufe des Verstellgetriebes ein gegenüber dem Schraubentrieb 26,30 untersetztes Keilgetriebe. Zur Verdrehsicherung weist der zylindrische Schieber 40 einen radial überstehenden Zapfen 46 auf, der in eine Parallelführung 48 des Grundkörpers 10 eingreift.

Der Drehmeißel 16 ist mit seinem im Querschnitt quadratischen Schaft 50 in einer achsparallel ausgerichteten Führungsöffnung 52 des Schiebers 40 zum Zwecke der Grobpositionierung verschiebbar angeordnet. Die Grobverstellung des Drehmeißels 16 erfolgt mit Hilfe eines Verstellbolzens 56 mit Differentialgewinde 58,60, der mit seinem einen Gewindeteil 58 in eine Gewindebohrung im Drehmeißel eingreift und mit seinem anderen Gewindeteil 60 in einem Innengewinde in der mit dem Schieber 40 starr verbundenen Gewindehülse 61 geführt ist. In der gewünschten Verschiebelage wird der Drehmeißel mit Hilfe einer Klemmschraube 54 am Schieber 40 festgelegt. Unter der Einwirkung der Klemmschraube 54 wird der Schieber 40 elastisch aufgeweitet und in seiner Führungsbohrung 42 spielfrei gestellt.

Das Kronenrad 22 liegt unter der Einwirkung mehrerer, in Umfangsrichtung im Abstand voneinander im Ring 62 angeordneter Druckfedern 64 spielfrei gegen das Ritzel 28 an. Der Ring 62 ist über den Paßzapfen 12 auf den Grundkörper 10 aufgeschoben und mittels eines nicht dargestelten Spannmechanismus gegen die Schulter 70 des Grundkörpers 10 gepreßt. Durch den radial überstehenden Teil des Rings 62 ergibt sich ein Axiallager für den zwischen den beiden Laufringen 72 angeordneten Verstellring 20, der mit dem Kronenrad 22 drehfest (Fig. 1 bis 3) oder einstückig (Fig. 4 bis 6) verbunden ist.

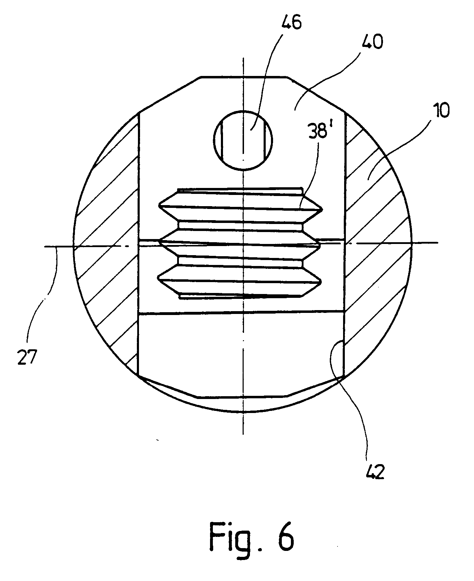

Wie insbesondere aus den Fig. 4 und 6 zu ersehen ist, weisen die Flächenverzahnungen 36', 38' im Querschnitt dreieckige oder trapezförmige Zähne und Zahnzwischenräume auf, die beim Gegeneinanderpressen keilförmig ineinandergreifen. Damit ist es möglich, den Schieber 40 durch Anpressen des Gleitkörpers 32 spielfrei zu stellen. Um dies praktisch zu ermöglichen, ist in einem Innengewinde 80 des Grundkörpers ein Gewindestift 82 axial verstellbar gelagert, der von außen her über die Axialbohrung 84 des Paßzapfens 12 durch einen Gewindeschlüssel betätigbar und über eine Druckplatte 86 gegen den Gleitkörper 32 anpreßbar ist. Um die Axialverschiebung des Gleitkörpers 32 ohne Ausübung von unerwünschten Zwangskräften auf die Gewindespindel 26 zu ermöglichen, ist die Gewindespindel 26 mit ihren Kugelkränzen 88 in Lagerscheiben 90 gelagert, die ihrerseits begrenzt in Richtung Werkzeugachse verschiebbar sind.

## Patentansprüche

1. Werkzeug für den Einsatz in Werkzeugmaschinen mit einem Grundkörper (10), einem mittels eines Verstellmechanismus relativ zum Grundkörper (10) verstellbaren, vorzugsweise als Drehmeißel ausgebildeten Schneidenträger (16), einer im Grundkörper (10) drehbar und axial unverschiebbar gelagerten Gewindespindel (26), einem mit einem Innengewinde (30) auf der Gewindespindel (26) angeordneten, parallel zur Gewindespindel (26) im Grundkörper (10) gleitend geführten Gleitkörper (32,36), einem im wesentlichen quer zur Gewindespindel (26) verschiebbar angeordneten, den Schneidenträger (16) tragenden oder bildenden Schieber (40) und einer am Schieber (40) angeordneten, mit der Gewindespindel (26) einen spitzen Keilwinkel einschließenden Keilführung (38) für den Eingriff des Gleitkörpers (32,36), **dadurch gekennzeichnet**, daß der zwischen Keilführung (38) und Gewindespindel (26) eingeschlossene Keilwinkel kleiner als 6° ist und daß die Gewindespindel (26) über einen am Umfang des Grundkörpers (10) um eine zur Achse der Gewindespindel (26) senkrechte Achse drehbaren Verstellring (10) durch ein Zahnradgetriebe (22,28) antreibbar ist, wobei das Zahnradgetriebe vorgespannt ist und ein drehfest auf der Gewindespindel angeordnetes Zahnritzel (28) enthält.

2. Werkzeug nach Anspruch 1, **dadurch gekennzeichnet**, daß der Grundkörper (10) eine im wesentlichen quer zur Gewindespindel (26) verlaufende zylindrische Lagerbohrung (42) für den zylindrischen Schieber (40) aufweist.

3. Werkzeug nach Anspruch 1 oder 2, **dadurch gekennzeichnet**, daß zwischen dem Schieber (40) und dem Grundkörper (10) eine Verdrehsicherung (46,48) angeordnet ist.

4. Werkzeug nach einem der Ansprüche 1 bis 3, **dadurch gekennzeichnet**, daß der zwischen Keilführung (38) und Gewindespindel (26) eingeschlossene Keilwinkel kleiner als 6°, vorzugsweise 1,5 bis 3° beträgt.

5. Werkzeug nach einem der Ansprüche 1 bis 4, **dadurch gekennzeichnet**, daß der Schneidenträger (16) am Schieber (40) zum Zwecke der Grobpositionierung parallel zu dessen Verschieberichtung vorzugsweise mittels eines Differentialgewindebolzens (56) verschiebbar geführt und in der gewünschten Verschiebeposition festlegbar ist.

6. Werkzeug nach einem der Ansprüche 1 bis 5, **dadurch gekennzeichnet**, daß im Schieber (40) eine parallel zur Verschieberichtung verlaufende, vorzugsweise im Querschnitt quadratische Führungsöffnung (52) zur Aufnahme eines Schneidenträgerschaftes (50) mit entsprechendem Querschnitt angeordnet ist.

7. Werkzeug nach einem der Ansprüche 1 bis 6, **dadurch gekennzeichnet**, daß die Gewindespindel (26) über einen am Umfang des Grundkörpers (10) um eine zur Spindelachse senkrechte Achse drehbaren Verstellring (20) mittels eines vorzugsweise als Kronenradgetriebe (22,28) ausgebildeten Getriebes antreibbar ist.

8. Werkzeug nach Anspruch 7, **dadurch gekennzeichnet**, daß das auf dem Grundkörper (10) gelagerte Kronenrad (22) des Kronenradgetriebes unter Vorspannung mit dem zugehörigen, auf der Spindelachse (26) drehfest angeordneten Ritzel (28) kämmt.

9. Werkzeug nach Anspruch 8, **dadurch gekennzeichnet**, daß das Kronenrad (22) auf einem am Grundkörper (10) angeordneten, vorzugsweise angeformten Zylinderzapfen (12) drehbar gelagert ist und an einem auf den Zylinderzapfen (12) aufgeschobenen, gegen eine Axialschulter (70) des Zylinderzapfens (12) gespannten, axial wirkende Federmittel (64) zur Erzeugung der Vorspannung enthaltenden Ringkörper (62) axial abgestützt ist.

10. Werkzeug nach Anspruch 9, **dadurch gekennzeichnet**, daß der Zylinderzapfen (12) axial über den Ringkörper (62) übersteht und zusammen mit dessen freier Stirnfläche ein Anschlußelement einer Paßzapfen-/Planflächenkupplung bildet.

11. Werkzeug nach einem der Ansprüche 1 bis 10, **dadurch gekennzeichnet**, daß das Passungsspiel des Gleitsteins (32,36) in der Gleitführung (34) des Grundkörpers (10) und in der Keilführung (38) des Schiebers (40) weniger als 5 µm beträgt.

12. Werkzeug nach einem der Ansprüche 1 bis 11, **dadurch gekennzeichnet,** daß das Passungsspiel des Schiebers (40) in seiner Führung (42) des Grundkörpers (10) weniger als 5 µm beträgt.

13. Werkzeug nach einem der Ansprüche 1 bis 12, **dadurch gekennzeichnet**, daß der Gleitkörper (32,36) als Gleitstein mit zwei um den Keilwinkel (α) gegeneinander versetzten Gleitflächenpaaren ausgebildet ist, und daß die Keilführung (38) als das eine Gleitflächenpaar (44) des Gleitsteins aufnehmende Führungskulisse ausgebildet ist.

14. Werkzeug nach einem der Ansprüche 1 bis 12, **dadurch gekennzeichnet**, daß der Schieber (40) eine die Keilführung bildende Flächenverzahnung (38') trägt, in die der Gleitkörper (32) mit einer komplementären Flächenverzahnung (36') eingreift.

15. Werkzeug nach Anspruch 14, **dadurch gekennzeichnet,** daß die zueinander komplementären Flächenverzahnungen (36',38') im Querschnitt dreieckige oder trapezförmige Zähne und Zahnzwischenräume aufweisen.

16. Werkzeug nach Anspruch 14 oder 15, **dadurch gekennzeichnet**, daß die zueinander komplementären Flächenverzahnungen (36',38') durch eine quer zur Verzahnungsfläche gerichtete Anpreßkraft in Verschieberichtung des Schiebers (40) spielfrei stellbar sind.

17. Werkzeug nach einem der Ansprüche 13 bis 16, **dadurch gekennzeichnet**, daß im Grundkörper (10) ein vorzugsweise als Gewindestift (82) ausgebildetes Klemmorgan verstellbar angeordnet ist, das zur Spielfreistellung des Schiebers (40) unmittelbar oder mittelbar über eine Druckplatte (46) gegen den Gleitkörper (32) quer zu der durch die Verschieberichtungen des Gleitkörpers (32) und des Schiebers (40) aufgespannten Ebene anpreßbar ist.

18. Werkzeug nach einem der Ansprüche 1 bis 17, **dadurch gekennzeichnet**, daß die Gewindespindel (26) quer zur Spindelachse schwimmend im Grundkörper (10) gelagert ist.

19. Werkzeug nach Anspruch 18, **dadurch gekennzeichnet**, daß die Gewindespindel endseitig in quer zur Spindelachse begrenzt gegenüber dem Grundkörper (10) verschiebbaren Kugellagern (88) und/oder Lagerscheiben (90) gelagert ist.

20. Werkzeug nach einem der Ansprüche 5 bis 19, **dadurch gekennzeichnet**, daß der Schneidenträger (16) mittels einer quer zur Schieberachse in einem Innengewinde des Schiebers (40) geführten Klemmschraube (54) am Schieber festlegbar ist.

21. Werkzeug nach Anspruch 20, **dadurch gekennzeichnet**, daß der Schieber (40) unter der Einwirkung der Klemmschraube (54) elastisch aufspreizbar und dadurch in seiner Führungsbohrung (42) spielfrei stellbar ist.

22. Werkzeug nach einem der Ansprüche 7 bis 21, **dadurch gekennzeichnet**, daß der Verstellring (20) drehfest, vorzugsweise einstückig mit dem Kronenrad (22) des Kronenradgetriebes verbunden ist.

## Claims

1. The invention relates to a tool for the use in machine tools, comprising a base body (10̸), a cutter (16) which is adjustable relative to the base body (10̸) by means of an adjustment mechanism and preferably arranged as a turning chisel, a threaded spindle (26) which is rotatably and axially indisplaceably mounted in the base body (30̸), a sliding body (32, 36) which is arranged with an inside thread (30̸) on the threaded spindle (26) and guided to slide parallel with the threaded spindle (26) in the base body (10̸), a slide (40̸) which is arranged to be movable substantially transversely to the threaded spindle (26) and which carries or forms the cutter (16), and a wedge guide (38) to include an acute wedge angle with the threaded spindle (26) for engagement of the sliding body (32, 36), **characterised in that** the wedge angle between wedge guide (38) and threaded spindle (26) is less than 6°, and that the threaded spindle (26) is driven, via an adjustment ring (10̸) which is rotatable at the periphery of the base body (10̸) around an axis which is perpendicular to the threaded-spindle axis (26), by a toothed gearing (22, 28), in which respect the toothed gearing is preloaded and comprises a toothed pinion (28) which is non-rotationally arranged on the threaded spindle.

2. Tool according to claim 1, **characterised in that** the base body (10̸) comprises a cylindrical mounting bore (42), which extends substantially transversely to the threaded spindle (26), for the cylindrical slide (40̸).

3. Tool according to claim 1 or 2, **characterised in that** a rotational lock (46, 48) is arranged between the slide (40̸) and the base body (10̸).

4. Tool according to one of claims 1 to 3, **characterised in that** the wedge angle between the wedge guide (38) and the threaded spindle (26) is less than 6°, preferably between 1.5 and 3°.

5. Tool according to one of claims 1 to 4, **characterised in that**, for the purpose of coarse positioning, the cutter (16) is guided at the slide (40̸) parallel to its displacement direction and preferably replaceable by means of a differential thread bolt (56), and that it can be secured in a desired displacement position.

6. Tool according to one of claims 1 to 5, **characterised in that** in the slide (40̸) is arranged a guide opening (52), which extends parallel with the displacement direction and which is preferably cross-sectionally square, for receiving a cutter support shaft (50̸) of respective cross-section.

7. Tool according to one of claims 1 to 6, **characterised in that** the threaded spindle (26) is driven by means of a gearing which is preferably a crown-wheel gearing (22, 28), via an adjustment ring (20̸), which is rotatable over the periphery of the base body (10̸) around an axis which is perpendicular relative to the spindle axis.

8. Tool according to claim 7, **characterised in that** crown wheel (22) of the crown-wheel gearing, which is mounted on the base body (10̸), meshes under a load with the associated pinion (28) which is non-rotationally arranged on the spindle axis (26).

9. Tool according to claim 8, **characterised in that** the crown wheel (22) is rotatingly mounted on a cylinder pin (12) which is arranged at and preferably integrated into the base body (10̸), and axially supported against a circular element (62), which is pushed onto the cylinder pin (12), tensioned towards an axial shoulder (70̸) of the cylinder pin (12) and comprises axially operating spring means (64) for producing a tension.

10. Tool according to claim 9, **characterised in that** the cylinder pin (12) protrudes axially over the circular body (62) and forms with its free end a connecting element of a fitting-pin coupling / plane-surface coupling.

11. Tool according to one of claims 1 to 10̸, **characterised in that** the fitting clearance of the block (32, 36) in the slide guide (34) of the base body (10̸) and in the wedge guide (38) of the slide (40̸) is less than 5 µm.

12. Tool according to one of claims 1 to 11, **characterised in that** the fitting clearance of the slide (40̸) in its guide (42) of the base body (10̸) is less than 5 µm.

13. Tool according to one of claims 1 to 12, **characterised in that** the slide body (32, 36) is arranged to be a block with two pairs of slide surfaces offset relative to each other by wedge angle (α), and that the wedge guide (38) is arranged as a guide link which accommodates the one pair of slide surfaces (44) of the block.

14. Tool according to one of claims 1 to 12, **characterised in that** the slide (40̸) comprises a surface toothing (38'), which forms the wedge guide and into which the slide body (32) engages with a complementary surface toothing (36').

15. Tool according to claim 14, **characterised in that** the surface toothings (36', 38') which complement one another comprise cross-sectionally triangular or trapezoidal teeth or tooth gaps.

16. Tool according to claim 14 or 15, **characterised in that** the surface toothings (36', 38') which complement one another are adjustable without play in the displacement direction of the slide (40̸) by a press-on force oriented transversely to the toothing surface.

17. Tool according to one of claims 13 to 16, **characterised in that** in the base body (10̸) is adjustably arranged a clamping element, preferably arranged to be a threaded pin (82), which is pressed directly or indirectly via a pressure plate (46) against the slide body (32) and transversely to a plane which is clamped by the displacement directions of the slide body (32) and the slide (40̸), for the purpose of play-free positioning of the slide (40̸).

18. Tool according to one of claims 1 to 17, **characterised in that** the threaded spindle (26) is floatingly mounted transversely to the spindle axis in the base body (10̸).

19. Tool according to claim 18, **characterised in that** the threaded spindle is mounted at its end in ballbearings (88) and/or bearing plates (90̸) which are displaceable transversely to the spindle axis and restrictedly relative to the base body (10̸).

20. Tool according to one of claims 5 to 19, **characterised in that** the cutters (16) are secured to the slide by means of a clamping bolt (54), which is guided transversely to the slide axis in an inside thread of the slide (40̸).

21. Tool according to claim 20̸, **characterised in that** the slide (40̸) is elastically expanded under the influence of clamping bolt (54), and can thus be set play-free in its guide bore (42).

22. Tool according to one of claims 7 to 21, **characterised in that** the adjustment ring (20̸) is non-rotationally, and preferably integrally connected to the crown wheel (22) of the crown-wheel gearing.

## Revendications

1. Outil pour l'utilisation dans des machines-outils, comprenant un corps de base (10), un porte-lame (16) déplaçable au moyen d'un mécanisme de réglage par rapport au corps de base (10) et avantageusement conformé en outil de tour, une broche filetée (26) montée de manière tournante et axialement immobile dans le corps de base (10), un corps coulissant (32, 36) monté au moyen d'un filetage intérieur (30) sur la broche filetée (26) et guidé dans le corps de base (10) de manière à coulisser parallèlement à la broche filetée (26), un coulisseau (40) déplaçable sensiblement transversalement par rapport à la broche filetée (26) et portant ou constituant le porte-lame (16), et un guidage à clavette (38) pour l'engagement du corps coulissant (32, 36), monté sur le coulisseau (40) et formant avec la broche filetée (26) un angle de calage aigu, **caractérisé en ce** que l'angle de calage entre le guidage à clavette (38) et la broche filetée (26) est inférieur à 6° et que la broche filetée (26) peut être entraînée par un engrenage (22, 28) par l'intermédiaire d'une bague de réglage (10) montée sur la périphérie du corps de base (10) et pouvant tourner autour d'un axe perpendiculaire à l'axe de la broche filetée (26), l'engrenage étant mis en précontrainte et comprenant un pignon (28) monté de manière solidaire en rotation sur la broche filetée.

2. Outil selon la revendication 1, caractérisé en ce que le corps de base (10) comporte un alésage de roulement (42) cylindrique pour le coulisseau (40) également cylindrique, qui s'étend sensiblement transversalement par rapport à la broche filetée (26).

3. Outil selon l'une des revendications 1 ou 2, caractérisé en ce qu'entre le coulisseau (40) et le corps de base (10) est disposé un système de blocage en rotation (46, 48).

4. Outil selon l'une des revendications 1 à 3, caractérisé en ce que l'angle de calage entre le guidage à clavette (38) et la broche filetée (26) est inférieur à 6° et se situe, de préférence, entre 1,5 et 3°.

5. Outil selon l'une des revendications 1 à 4, caractérisé en ce que pour le positionnement approximatif, le porte-lame (16) est guidé sur le coulisseau (40) parallèlement à la direction de déplacement dudit coulisseau, de préférence au moyen d'un boulon à filetage différentiel (56) et peut être bloqué dans la position de déplacement souhaitée.

6. Outil selon l'une des revendications 1 à 5, caractérisé en ce que dans le coulisseau (40) est prévue une ouverture de guidage (52) qui s'étend parallèlement à la direction de mouvement de celui-ci et présente de préférence une section quadratique, et qui est destinée à recevoir une tige (50) de porte-lame d'une section transversale correspondante.

7. Outil selon l'une des revendications 1 à 6, caractérisé en ce que la broche filetée (26) peut être entraînée par l'intermédiaire d'une bague de réglage (20) qui peut tourner sur la périphérie du corps de base (10) autour d'un axe perpendiculaire à l'axe de la broche, au moyen d'un engrenage conformé de préférence en engrenage de chant (22, 28).

8. Outil selon la revendication 7, caractérisé en ce que la roue de chant (22) de l'engrenage de chant montée sur le corps de base (10) coopère sous précontrainte avec le pignon (28) solidaire en rotation avec l'axe (26) de la broche.

9. Outil selon la revendication 8, caractérisé en ce que la roue de chant (22) est montée de manière tournante sur un tourillon cylindrique (12) disposé sur le corps de base (10) et de préférence conformé sur celui-ci, et s'appuie axialement sur un corps annulaire (62) engagé sur le tourillon cylindrique (12), bloqué contre un épaulement axial (70) dudit tourillon cylindrique (12) et comprenant des organes élastiques (64) qui agissent dans le sens axial pour la mise en précontrainte.

10. Outil selon la revendication 9, caractérisé en ce que le tourillon cylindrique (12) dépasse axialement du corps annulaire (62) et forme, conjointement avec la surface frontale libre de ce dernier, un élément de raccordement d'un accouplement tourillon d'ajustement/surface plane.

11. Outil selon l'une des revendications 1 à 10, caractérisé en ce que le jeu d'ajustement du corps coulissant (32, 36) dans le guidage à glissement (34) du corps de base (10) et dans le guidage à clavette (38) du coulisseau (40) est inférieur à 5 µm.

12. Outil selon l'une des revendications 1 à 11, caractérisé en ce que le jeu d'ajustement du coulisseau (40) dans son guidage (42) du corps de base (10) est inférieur à 5 µm.

13. Outil selon l'une des revendications 1 à 12, caractérisé en ce que le corps coulissant (32, 36) est conformé en coulisseau avec deux paires de surfaces de glissement décalées l'une par rapport à l'autre de l'angle de calage (α), et que le guidage à clavette (38) est réalisé sous la forme d'une coulisse de guidage recevant l'une des paires de surfaces de glissement (44) du coulisseau.

14. Outil selon l'une des revendications 1 à 12, caractérisé en ce que le coulisseau (40) comporte une denture plane (38') qui forme le guidage à clavette et dans laquelle le corps coulissant (32) s'engage avec une denture plane (36') complémentaire.

15. Outil selon la revendication 14, caractérisé en ce que les dentures planes (36', 38') complémentaires présentent des dents et entredents de section triangulaire ou trapézoïdale.

16. Outil selon l'une des revendications 14 ou 15, caractérisé en ce que les dentures planes (36', 38') complémentaires peuvent être déplacées sans jeu dans la direction de mouvement du coulisseau (40) par une force de pression agissant transversalement par rapport à la surface dentée.

17. Outil selon l'une des revendications 13 à 16, caractérisé en ce que dans le corps de base (10) est disposé de manière mobile un organe de serrage conformé de préférence en tige filetée (82) qui, pour la suppression du jeu du coulisseau (40), peut être pressé directement ou indirectement, par l'intermédiaire d'une plaque de pression (46), contre le corps coulissant (32), transversalement au plan délimité par les directions de déplacement du corps coulissant (32) et du coulisseau (40).

18. Outil selon l'une des revendications 1 à 17, caractérisé en ce que la broche filetée (26) est montée dans le corps de base (10) de manière à flotter transversalement à l'axe de la broche.

19. Outil selon la revendication 18, caractérisé en ce que la broche filetée est montée aux extrémités dans des roulements à billes (88) et/ou dans des flasques (90) qui peuvent être déplacés de manière limitée transversalement à l'axe de la broche par rapport au corps de base (10).

20. Outil selon l'une des revendications 5 à 19, caractérisé en ce que le porte-lame (16) peut être immobilisé sur le coulisseau au moyen d'une vis de serrage (54) guidée transversalement à l'axe du coulisseau dans un filetage intérieur du coulisseau (40).

21. Outil selon la revendication 20, caractérisé en ce que le coulisseau (40) peut être écarté élastiquement sous l'action de la vis de serrage (54) et qu'il peut ainsi être déplacé sans jeu dans son alésage de guidage (42).

22. Outil selon l'une des revendications 7 à 21, caractérisé en ce que la bague de réglage (20) est couplée de manière rigide en rotation, de préférence conformée d'un seul tenant, avec la roue de chant (22) de l'engrenage de chant.
